(19) **Europäisches Patentamt / European Patent Office / Office européen des brevets**

(11) **EP 3 022 258 B1**

(12) **FASCICULE DE BREVET EUROPEEN**

(45) Date de publication et mention
de la délivrance du brevet:
**09.05.2018 Bulletin 2018/19**

(21) Numéro de dépôt: **14736828.6**

(22) Date de dépôt: **08.07.2014**

(51) Int Cl.:
*B60C 1/00* (2006.01)      *C08K 5/00* (2006.01)
*C08L 23/22* (2006.01)      *C08K 3/00* (2018.01)

(86) Numéro de dépôt international:
**PCT/EP2014/064628**

(87) Numéro de publication internationale:
**WO 2015/007577 (22.01.2015 Gazette 2015/03)**

(54) **BANDE DE ROULEMENT DE PNEUMATIQUE**

REIFENLAUFFLÄCHE

TYRE TREAD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.07.2013 FR 1356923**

(43) Date de publication de la demande:
**25.05.2016 Bulletin 2016/21**

(73) Titulaire: **Compagnie Générale des
Etablissements Michelin
63000 Clermont-Ferrand (FR)**

(72) Inventeurs:
• **COSTE, Nathalie
F-63040 Clermont-Ferrand Cedex 9 (FR)**
• **LEMASSON, Guillaume
F-63040 Clermont-Ferrand Cedex 9 (FR)**
• **SCHACH, Régis
F-63040 Clermont-Ferrand Cedex 9 (FR)**

(74) Mandataire: **Gandon-Pain, Sylvie
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**WO-A1-02/088238      WO-A1-2005/044593
WO-A1-2012/010667      FR-A1- 2 861 736
FR-A1- 2 974 808**

**Description**

La présente invention est relative aux bandes de roulement de pneumatiques comportant des compositions de caoutchouc à base de caoutchouc butyl.

Une des exigences requises pour un pneumatique est d'assurer une adhérence optimale sur route, notamment sur sol mouillé. Une façon de conférer au pneumatique une adhérence élevée sur sol mouillé est d'utiliser une composition de caoutchouc dans sa bande de roulement, laquelle composition présente un large potentiel hystérétique.

Mais en même temps la bande de roulement de pneumatique doit aussi minimiser sa contribution à la résistance au roulement du pneumatique, c'est à dire être la moins hystérétique possible. Ainsi la composition de caoutchouc de la bande de roulement doit-elle satisfaire à deux exigences antinomiques, à savoir présenter un potentiel d'hystérèse maximal pour satisfaire à l'exigence d'adhérence et présenter une hystérèse aussi faible que possible pour satisfaire à l'exigence de résistance au roulement.

Les manufacturiers de pneumatiques ont donc proposé des matériaux hystérétiques, comme par exemple des compositions à base de copolymères de butadiène et de styrène avec un taux pondéral de styrène d'au moins 35%, des compositions de caoutchouc comportant des taux élevés de charges renforçantes ou de plastifiants. Mais ces solutions se font généralement au détriment de la résistance au roulement.

Il a été aussi proposé d'introduire du caoutchouc butyl dans les compositions de caoutchouc des bandes de roulement des pneumatiques pour améliorer leur adhérence sur sol mouillé. En effet le caoutchouc butyl est un élastomère dont le potentiel de dissipation est connu et constitue en soi un bon candidat pour améliorer l'adhérence, notamment sur sol mouillé comme l'enseigne le brevet US 6,060,552. Mais ce brevet enseigne aussi que le caoutchouc butyl doit être utilisé à des taux d'au plus de 30 parties pour cent parties d'élastomère (pce) pour minimiser sa contribution hystérétique dans le domaine de la résistance au roulement.

Le brevet EP 1 687 370 B1 divulgue que l'utilisation, dans une bande de roulement de pneumatique, d'une composition de caoutchouc renforcée d'une silice et comprenant un certain taux de caoutchouc butyl et de trioléate de glycérol permet d'améliorer l'adhérence sur sol mouillé du pneumatique. On peut aussi se référer à la demande internationale correspondante WO20050445931 A1 qui divulgue une composition de caoutchouc pour bande de roulement comprenant entre 50 et 100 parties de caoutchouc butyl, entre 40 et 130 parties de charge renforçante et entre 15 et 30 parties de trioléate de glycérol comme plastifiant. Une telle composition permet d'obtenir un bon compromis entre la performance d'usure et la performance d'adhérence sur sol mouillé. La demande de brevet FR 2 861 736 A1 divulgue une composition de caoutchouc pour une bande de roulement qui comprend entre 40 et 80 parties de caoutchouc butyl et entre 10 et 50 parties de triester de glycérol comme plastifiant. Cette composition permet d'améliorer la performance sur sol mouillé de la bande de roulement. Satisfaire à la fois à l'exigence d'adhérence, notamment sur sol mouillé, et de résistance au roulement reste une préoccupation constante des manufacturiers de pneumatiques.

Les Demanderesses ont découvert lors de leurs recherches que la présence combinée d'un caoutchouc butyl et d'un plastifiant spécifique à un certain taux dans la composition de caoutchouc, permettait d'améliorer l'adhérence sur sol mouillé des bandes de roulement de pneumatique à base de caoutchouc butyl et simultanément diminuer la résistance au roulement du pneumatique.

Un premier objet de l'invention concerne une bande de roulement de pneumatique qui comprend une composition de caoutchouc à base d'une matrice élastomère qui comprend plus de 80 pce et jusqu'à 100 pce d'au moins un caoutchouc butyl, d'une charge renforçante et d'un système plastifiant qui comprend de 20 à 40 pce d'au moins un premier plastifiant compatible avec l'au moins un caoutchouc butyl et de température de transition vitreuse inférieure à -75°C, le taux massique du système plastifiant $P$ exprimé par rapport à la masse de l'au moins un caoutchouc butyl et la température de transition vitreuse $Tg_P$ du système plastifiant exprimée en degré Kelvin satisfaisant à la relation suivante :

$$P \times (208 - Tg_P) \div Tg_P \geq 0.015$$

Le taux massique du système plastifiant $P$ exprimé par rapport à la masse de l'au moins un caoutchouc butyl est défini par le rapport de la masse du système plastifiant sur la somme de la masse du système plastifiant et de la masse de l'au moins un caoutchouc butyl.

L'invention a également pour objet un pneumatique comportant une bande de roulement conforme à l'invention.

L'invention a aussi pour objet un procédé pour préparer une bande de roulement de pneumatique conforme à l'invention.

L'invention a également pour objet une composition de caoutchouc utilisable dans une bande de roulement, laquelle composition est à base d'une matrice élastomère qui comprend plus de 80 pce et jusqu'à 100 pce d'au moins un caoutchouc butyl, d'une charge renforçante constituée majoritairement en poids d'une charge inorganique renforçante, d'un agent de couplage et d'un système plastifiant qui comprend de 20 à 40 pce d'au moins un premier plastifiant compatible avec l'au moins un caoutchouc butyl et de température de transition vitreuse inférieure à -75°C, le taux massique du système plastifiant P exprimé par rapport à la masse de l'au moins un caoutchouc butyl et la température de transition vitreuse $Tg_P$ du système plastifiant exprimée en degré Kelvin satisfaisant à la relation suivante :

$$P \times (208 - Tg_P) \div Tg_P \geq 0.015$$

L'invention a aussi pour objet un procédé pour préparer une composition de caoutchouc utilisable dans une bande de roulement et définie comme ci-dessus avec la particularité que la charge renforçante est constituée majoritairement en poids d'une charge inorganique renforçante, laquelle composition comprend en outre un agent de couplage.

## DESCRIPTION DETAILLEE DE L'INVENTION :

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Tous les pourcentages sont des pourcentages massiques sauf indication contraire.

Une caractéristique essentielle de la matrice élastomère de la composition de caoutchouc de la bande de roulement conforme à l'invention est de comprendre au moins un caoutchouc butyl. Les caoutchoucs butyl sont bien connus de l'homme de l'art notamment pour leur propriété d'imperméabilité à l'air. Il s'agit de copolymères d'isobutylène et de diène en $C_4$ à $C_6$, notamment d'isoprène. Généralement ces copolymères contiennent 1 à 5% en mole d'unité diénique, notamment isoprénique et présentent une viscosité Mooney (ML 1+8 à 125°C) de 30 à 60.

L'au moins un caoutchouc butyl peut être un caoutchouc butyl halogéné.

On appelle caoutchouc butyl halogéné les copolymères halogénés d'isobutylène et de diène en $C_4$ à $C_6$, notamment d'isoprène. Ils sont obtenus par halogénation, notamment par chloration ou bromation des copolymères d'isobutylène et de diène en $C_4$-$C_6$, notamment d'isoprène. Les copolymères halogénés d'isobutylène et de diène en $C_4$-$C_6$, notamment d'isoprène, présentent généralement un taux d'halogène de 1 à 4% en poids du poids de copolymère. Le caoutchouc butyl halogéné est préférentiellement un caoutchouc butyl bromé.

Par extension de la définition de caoutchouc butyl, l'au moins un caoutchouc butyl peut être aussi un terpolymère d'isobutylène, de paraméthylstyrène et de paraméthylstyrène halogéné, préférentiellement bromé, commercialisé sous l'appellation EXXPRO par EXXON ou le Polysar XL 10000 de Bayer.

Le taux de l'au moins un caoutchouc butyl est supérieur à 80 pce et inférieur ou égal à 100 pce. Il est préférentiellement supérieur à 85 pce, plus préférentiellement supérieur à 90 pce et inférieur ou égal à 100pce. De façon encore plus préférentielle, il est égal à 100 pce.

Lorsque le taux pondéral de l'au moins un caoutchouc butyl est inférieur à 100% du poids de la matrice élastomère, c'est-à-dire lorsque le taux de l'au moins un caoutchouc butyl est inférieur à 100 pce, on utilise un autre élastomère diénique essentiellement insaturé ou un mélange d'élastomères diéniques essentiellement insaturés pour compléter à 100%. La matrice élastomère est alors constituée de l'au moins un caoutchouc butyl et d'élastomère diénique essentiellement insaturé.

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles). Conviennent comme élastomère diénique essentiellement insaturé les polybutadiènes, les polyisoprènes y compris le caoutchouc naturel, les copolymères de butadiène, les copolymères d'isoprène et les mélanges de ces élastomères. Conviennent aussi les copolymères de monomères diènes conjugués et de vinylaromatiques, notamment de styrène.

La composition de caoutchouc de la bande de roulement conforme à l'invention comporte tout type de charge dite renforçante, connue pour ses capacités à renforcer une composition de caoutchouc utilisable pour la fabrication de pneumatiques, par exemple une charge organique renforçante telle que du noir de carbone, une charge inorganique renforçante telle que de la silice, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les bandes de roulement de pneumatique. Parmi ces derniers, on citera plus particulièrement les noirs de carbone renforçants des séries 100, 200, 300 (grades ASTM), comme par exemple les noirs N115, N134, N234, N326, N330, N339, N347, N375. Ces noirs de carbone peuvent être utilisés à l'état isolé, tels que disponibles commercialement, ou sous tout autre forme, par exemple comme support de certains des additifs de caoutchouterie utilisés.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 m$^2$/g.

A titre de charge inorganique renforçante, on citera également les charges minérales du type alumineuse, en particulier de l'alumine ($Al_2O_3$) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

De manière préférentielle, le taux de charge renforçante est compris entre 40 et 150 pce. En deçà de 40 pce, le renforcement de la composition de caoutchouc est insuffisant pour apporter un niveau de cohésion ou de résistance à l'usure adéquats de la composition de caoutchouc. De manière encore plus préférentielle, le taux de charge renforçante est d'au moins 50 pce. Au-delà de 150 pce, il existe un risque d'augmentation de l'hystérèse et donc de la résistance au roulement des pneumatiques. Pour cette raison, le taux de charge renforçante est de préférence dans un domaine allant de 50 à 120 pce.

Selon un mode de réalisation de l'invention, la charge renforçante comprend une charge organique renforçante, préférentiellement un noir de carbone.

Selon un autre mode de réalisation de l'invention, la charge renforçante comprend une charge inorganique renforçante, préférentiellement une silice.

Selon un mode de réalisation préférentiel de l'invention, la charge renforçante est constituée majoritairement en poids d'une charge inorganique renforçante, ce qui signifie que la charge inorganique renforçante constitue plus de 50% en poids de la charge renforçante de la composition de caoutchouc de la bande de roulement conforme à l'invention. Cette charge inorganique renforçante est préférentiellement une silice.

Selon un mode de réalisation particulier où la charge inorganique renforçante telle que la silice représente plus de 50% en poids de la charge renforçante, le noir de carbone est utilisé de préférence à un taux inférieur à 20 pce, plus préférentiellement inférieur à 10 pce (par exemple entre 0.5 et 20 pce, notamment entre 2 et 10 pce), encore plus préférentiellement inférieur à 5 pce. Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Pour coupler la charge inorganique renforçante à au moins un des élastomères qui constituent la matrice élastomère de la composition de caoutchouc, notamment dans le cas où la charge inorganique constitue plus de 50% en poids de la charge renforçante de la composition de caoutchouc, on utilise généralement et de manière bien connue un agent de couplage (ou agent de liaison). Par agent de couplage, on entend plus précisément un agent apte à établir une liaison suffisante de nature chimique et/ou physique entre la charge considérée et l'élastomère, tout en facilitant la dispersion de cette charge au sein de la matrice élastomère.

Cet agent au moins bifonctionnel est destiné à assurer une connexion suffisante, de nature chimique et/ou physique, entre la charge inorganique (surface de ses particules) et l'élastomère. On utilise en particulier des organosilanes, notamment des alkoxysilanes polysulfurés ou des mercaptosilanes, ou encore des polyorganosiloxanes porteurs de fonctions capables de se lier physiquement et/ou chimiquement à la charge inorganique et de fonctions capables de se lier physiquement et/ou chimiquement à l'élastomère, par exemple par l'intermédiaire d'un atome de soufre. Des agents de liaison silice/élastomère, notamment, ont été décrits dans un grand nombre de documents, les plus connus étant des alkoxysilanes bifonctionnels tels que des alkoxysilanes polysulfurés. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevet WO 02/30939 (ou US 6,774,255) et WO 02/31041 (ou US 2004/051210), ou encore des silanes ou POSS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2010/072685 et WO 2008/055986.

Selon le mode de réalisation particulier de l'invention où on utilise un caoutchouc butyl halogéné, l'agent de couplage est préférentiellement un aminoalkylalcoxysilane. On entend par aminoalkylalcoxysilane un alkylalcoxysilane dans lequel le radical alkyle porte un groupement aminé. Le radical alkyle est préférentiellement en $C_1$-$C_6$, plus préfé-rentiellement éthyle ou propyle. Le radical alcoxy est préférentiellement en $C_1$-$C_6$, plus préférentiellement $C_1$-$C_3$, encore plus préférentiellement méthoxy ou éthoxy. Le groupement aminé est préférentiellement $NH_2$. Par ailleurs l'aminoalky-lalcoxysilane est avantageusement un aminoalkyltrialcoxysilane. A titre d'aminoalkytrialcoxysilane conviennent tout particulièrement le 3-aminopropyltriméthoxysilane et le 3-aminopropyltriéthoxysilane.

Selon ce mode de réalisation particulier de l'invention, l'aminoalkylalcoxysilane peut être aussi utilisé en mélange avec un autre agent de couplage de structure chimique différente. Préférentiellement ce mélange contient un aminoalkylalcoxysilane et un alkoxysilane polysulfuré, en particulier un mélange de 3-aminopropyltriéthoxysilane et de tétrasulfure de bis(3-triéthoxysilylpropyle) (TESPT).

La teneur en agent de couplage, qu'il s'agisse d'un seul composé ou d'un mélange de composés, est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

Alternativement, l'agent de couplage peut être apporté par la silice dont la surface a été au préalable modifiée par un organosilane, comme le tétrasulfure de bis(3-triéthoxysilylpropyl) ou mercaptosilanes. De telles silices sont commercialisées par Evonik et PPG sous les appellations respectives « Coupsil » et « Ciptane ».

La composition de caoutchouc de la bande de roulement conforme à l'invention peut également contenir des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité de la composition de caoutchouc, d'améliorer sa faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

L'au moins un premier plastifiant présente une température de transition vitreuse inférieure à -75°C, préférentiellement inférieure à -85°C, plus préférentiellement inférieure à -95°C.

L'au moins un premier plastifiant selon l'invention est compatible avec l'au moins un caoutchouc butyl. La compatibilité d'un plastifiant avec un élastomère est une notion bien connue de l'homme du métier des compositions de caoutchouc. Selon l'invention, le plastifiant est dit compatible avec l'élastomère, l'au moins un caoutchouc butyl, lorsque le plastifiant et l'élastomère forment un mélange qui présente une seule température de transition vitreuse, le plastifiant et l'élastomère étant dans des proportions relatives identiques à celles de la composition de caoutchouc de la bande de roulement conforme à l'invention. La température de transition vitreuse peut être déterminée par analyse calorimétrique différentielle DSC (Differential Scanning Calorimeter) selon la norme ASTM D3418 (1999).

Comme l'au moins un premier plastifiant conviennent les huiles végétales, les plastifiants esters d'acides carboxyliques, les plastifiants sulfonates, les huiles polysiloxanes de très faibles masses molaires moyennes en nombre, typiquement inférieures ou égales à 2000 g/mol, notamment les polydiméthylsiloxanes, les polyalkylèneglycols, notamment les polyéthylèneglycols de masse molaire moyenne en nombre d'au plus 4000 g/mol, les huiles polyoléfiniques, les huiles polydiènes de faible masse molaire moyenne en nombre et les mélanges de ces composés.

Parmi les esters d'acides carboxyliques, on peut citer les monoesters et les diesters d'acides carboxyliques, en particulier de l'acide laurique tel que le 2-éthylhexyllaurate ou Esterob 608.11, le dibutyladipate, le dibutylphtalate, le butylcyclohexyladipate, le dibutylsébacate, le di(2-éthylhexyl)adipate, le butyloctylsébacate ou le di(2-éthylhexyl)sébacate.

Parmi les esters d'acides carboxyliques, on peut aussi citer les triesters d'acides carboxyliques. Conviennent tout particulièrement les triesters de glycérol et d'acides carboxyliques, de préférence constitués majoritairement (pour plus de 50 %, plus préférentiellement pour plus de 80 % en poids) d'un acide gras insaturé en C$_{18}$, c'est-à-dire choisi dans le groupe constitué par l'acide oléique, l'acide linoléique, l'acide linolénique et les mélanges de ces acides. Le trioléate de glycérol est particulièrement préféré.

Parmi les polydiènes, on peut citer les homopolymères de butadiène, notamment ceux ayant une teneur en unité 1,2-butadiénique inférieure à 30%. Ils ont typiquement une masse molaire moyenne en nombre inférieure à 8000, préférentiellement inférieure à 5000 g/mol. Conviennent par exemple les polybutadiene Resins de Cray Valley, de masse molaire moyenne en nombre comprise entre 2500 et 8000 g/mol, notamment le Ricon 130 de masse molaire moyenne en nombre de 2500 g/mol et de température de transition vitreuse d'environ -85°C. Parmi les polydiènes, on peut aussi citer les homopolymères d'isoprène, notamment ceux ayant une teneur en unité cis-1,4 supérieure à 90% et qui présentent préférentiellement une masse molaire moyenne en nombre inférieure ou égale à 3000 g/mol.

L'au moins un premier plastifiant peut être aussi un mélange de plastifiants de nature chimique différente, chacun des plastifiants présentant l'une quelconque des valeurs de température de transition vitreuse conformément à l'invention. On peut citer par exemple un mélange de tris(2-éthylhexyl)phosphate et d'une huile polybutène de Tg respective -114°C et -84°C.

Le taux de l'au moins un premier plastifiant dans la composition de caoutchouc varie de 20 à 40 pce. Il est aussi choisi en fonction de la température de transition vitreuse et de la quantité massique du système plastifiant. Le taux massique du système plastifiant $P$ exprimé par rapport à la masse de l'au moins un caoutchouc butyl et la température de transition vitreuse $Tg_P$ du système plastifiant exprimée en degré Kelvin satisfont à la relation suivante :

$$P \times (208 - Tg_P) \div Tg_P \geq 0.015$$

Selon un mode de réalisation préférentiel de l'invention, le taux massique du système plastifiant $P$ exprimé par rapport à la masse de l'au moins un caoutchouc butyl et la température de transition vitreuse $Tg_P$ du système plastifiant exprimée en degré Kelvin satisfont à la relation suivante :

$$P \times (208 - Tg_P) \div Tg_P \geq 0.025$$

Selon ce mode de réalisation préférentiel de l'invention, le taux de l'au moins un premier plastifiant dans la composition de caoutchouc varie de 20 à 40 pce.

Selon un mode de réalisation particulièrement préférentiel, l'au moins un premier plastifiant constitue le seul plastifiant de la composition de caoutchouc, c'est-à-dire que le système plastifiant consiste en l'au moins un premier plastifiant, c'est à dire de un ou plusieurs plastifiants dont la température de transition vitreuse est conforme à l'invention. De préférence le système plastifiant est constitué d'un seul plastifiant de température de transition vitreuse conforme à l'invention et compatible avec l'au moins un caoutchouc butyl.

Selon un autre mode de réalisation de l'invention, le système plastifiant de la composition de caoutchouc peut contenir un autre plastifiant, dit « deuxième plastifiant », en plus de l'au moins un premier plastifiant. Le deuxième plastifiant présente une température de transition vitreuse supérieure ou égale à -75°C, comme par exemple les huiles conventionnellement utilisées dans les compositions de caoutchouc, telles que les huiles paraffiniques, aromatiques et naphténiques. Le deuxième plastifiant est utilisé à un taux compris préférentiellement entre à 0 et 30 pce, plus préférentiellement entre 0 et 15 pce.

La composition de caoutchouc de la bande de roulement conforme à l'invention peut aussi comporter également tout ou partie des additifs usuels habituellement utilisés dans les compositions de caoutchouc destinées à la fabrication de pneumatiques, comme par exemple des pigments, des agents de protection tels que cires anti-ozone, anti-ozonants chimiques, antioxydants, des agents anti-fatigue, un système de réticulation à base soit de soufre, soit de donneurs de soufre et/ou de peroxyde et/ou de bismaléimides, des accélérateurs de vulcanisation, des activateurs de vulcanisation et les mélanges de tels composés.

La composition de caoutchouc de la bande de roulement conforme à l'invention peut être fabriquée dans des mélangeurs appropriés, en utilisant généralement deux phases de préparation successives bien connues de l'homme du métier : une première phase de travail ou malaxage thermomécanique (phase dite « non-productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc de la bande de roulement conforme à l'invention peut être préparée selon un procédé qui comprend les étapes suivantes :

- malaxer thermomécaniquement la matrice élastomère qui comprend l'au moins un caoutchouc butyl, la charge renforçante et le système plastifiant, le cas échéant l'agent de couplage et les autres additifs de la composition de caoutchouc à l'exception du système de réticulation, jusqu'à atteindre une température maximale comprise entre 110°C et 190°C ;
- refroidir l'ensemble à une température inférieure à 100°C ;
- incorporer ensuite un système de réticulation ;
- malaxer le tout jusqu'à une température maximale inférieure à 110°C pour obtenir une composition de caoutchouc.

La bande de roulement conforme à l'invention peut être fabriquée selon le procédé décrit ci-dessus qui comporte une étape supplémentaire de calandrage ou d'extrusion de la composition de caoutchouc.

L'invention concerne la bande de roulement précédemment décrite tant à l'état cru (c'est à dire, avant cuisson) qu'à l'état cuit (c'est à dire, après réticulation ou vulcanisation). L'invention concerne aussi le pneumatique comportant une bande de roulement conforme à l'invention, lequel pneumatique est tant à l'état cru qu'à l'état cuit.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

L'invention concerne également une composition de caoutchouc qui présente l'une quelconque des caractéristiques de la composition de caoutchouc de la bande de roulement conforme à l'invention. Cette composition de caoutchouc, objet particulier de l'invention, a aussi pour caractéristique essentielle de comprendre une charge inorganique, préférentiellement une silice, qui constitue plus de 50% en poids de la charge renforçante de la composition de caoutchouc. Elle a également pour caractéristique essentielle de comprendre un agent de couplage tel que défini précédemment pour lier la charge inorganique, notamment la silice, à l'élastomère de la composition de caoutchouc.

La composition de caoutchouc, objet particulier de l'invention, peut être préparée selon un procédé qui comprend les étapes suivantes :

- malaxer thermomécaniquement la matrice élastomère qui comprend plus de 50% en poids de l'au moins un caoutchouc butyl, la charge renforçante, l'agent de couplage et le système plastifiant, jusqu'à atteindre une température maximale comprise entre 110°C et 190°C ;
- refroidir l'ensemble à une température inférieure à 100°C ;
- incorporer ensuite un système de réticulation ;
- malaxer le tout jusqu'à une température maximale inférieure à 110°C pour obtenir une composition de caoutchouc.

Les caractéristiques précitées de la présente invention, ainsi que d'autres, seront mieux comprises à la lecture de la description suivante de plusieurs exemples de réalisation de l'invention, donnés à titre illustratif et non limitatif.

## EXEMPLES DE REALISATION DE L'INVENTION :

Exemple 1 :

La température de transition vitreuse est mesurée au moyen d'un calorimètre différentiel ("Differential Scanning Calorimeter") selon la norme ASTM D3418 (1999). Dans le cas d'un mélange de plastifiants, la mesure est effectuée sur le mélange de plastifiants dans les proportions relatives de celles de la composition de caoutchouc de la bande de roulement conforme à l'invention.

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm$^2$ de section), soumis à une sollicitation sinusoïdale en cisaillement simple alterné, à la fréquence de 10 Hz, dans les conditions normales de température (23°C) selon la norme ASTM D 1349-09. On effectue un balayage en amplitude de déformation crête-crête de 0,1 à 50% (cycle aller), puis de 50% à 0,1% (cycle retour). Le résultat exploité est le facteur de perte $\tan\delta$. Pour le cycle retour, on indique la valeur maximale de $\tan\delta$ observée ($\tan\delta_{max}$).

Le facteur de perte à 23°C est exprimé en base 100. Le témoin ayant un indice 100, une valeur supérieure à 100 indique un résultat amélioré : la composition de l'exemple considéré est moins hystérétique à 23°C, traduisant une moindre résistance au roulement de la bande de roulement comportant une telle composition.

Sur le même appareillage, on enregistre la réponse d'un échantillon de composition vulcanisée (éprouvette cylindrique de 2 mm d'épaisseur et de 79 mm$^2$ de section), à une contrainte donnée, à la fréquence de 10 Hz, dans des conditions de températures variables. Le résultat exploité est le facteur de perte tan ($\delta$) à -20°C. Le facteur de perte est exprimé en base 100 par rapport au facteur de perte de la composition témoin. Une valeur supérieure à 100 témoigne d'un résultat amélioré avec une hystérèse plus élevée de la composition considérée, à -20°C, traduisant une meilleure adhérence sur sol mouillé de la bande de roulement comportant une telle composition.

Préparation des compositions de caoutchouc C0, C1, C2, C3 et C4 :

Les formulations (en pce) des compositions C0 à C4 sont décrites dans le tableau I.

Les plastifiants utilisés sont tous compatibles avec le caoutchouc butyl utilisé.

Les compositions C1 à C4 contiennent toute 100 pce d'un caoutchouc butyl bromé et 25 pce de plastifiant. Elles diffèrent par la nature du plastifiant. Le plastifiant de C1 est l'huile de tournesol à 85% en poids d'acide oléique et de Tg -90°C. Le plastifiant de C2 est un mélange de deux huiles polybutène de Tg -103°C et -84°C respectivement. Le plastifiant de C3 est un mélange de 12.5 pce d'huile polybutène de Tg -84°C et de 12.5 pce de tris(2-éthylhexyl)phosphate de Tg -114°C. Le plastifiant de C4 est une huile TDAE (*Treated Distillate Aromatic Extracts*) de Tg -44°C qui est conventionnellement utilisée dans les compositions de caoutchouc pour bande de roulement. Les compositions C1, C2 et C3 sont conformes à l'invention puisqu'elles contiennent entre 10 et 50 pce d'un plastifiant de Tg inférieure à -75°C ou d'un mélange de plastifiants, tous de Tg inférieure à -75°C.

La composition C4 n'est pas conforme à l'invention, car elle ne contient pas de plastifiant de Tg inférieure à -75°C.

La composition C0 ne contenant pas de plastifiant n'est pas conforme non plus à l'invention. Elle contient 100 pce d'un caoutchouc butyl bromé, 74 pce de silice et 5 pce de noir de carbone comme charge renforçante, ce qui correspond à une fraction volumique de charge renforçante de 25%. Cette fraction volumique de charge renforçante est identique à celle de C1, C2, C3 et C4.

Pour chacune des compositions, les taux de silane ont été ajustés en fonction du taux de silice présent dans la composition de caoutchouc.

On procède pour la fabrication de ces compositions de la manière suivante : on introduit dans un mélangeur interne (taux de remplissage final : environ 70% en volume), dont la température initiale de cuve est d'environ 60°C, successivement l'élastomère, la silice, l'agent de couplage, le cas échéant le plastifiant, ainsi que les divers autres ingrédients à l'exception du système de vulcanisation. On conduit alors un travail thermomécanique (phase non-productive) en une étape, qui dure au total 5 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Tableau I

| | C0 non conforme | C1 conforme | C2 conforme | C3 conforme | C4 non conforme |
|---|---|---|---|---|---|
| BIIR (1) | 100 | 100 | 100 | 100 | 100 |
| Silice (2) | 74 | 90 | 90 | 90 | 90 |
| Silane (3) | 4.8 | 6.0 | 6.0 | 6.0 | 6.0 |
| Noir de carbone N234 | 5 | 5 | 5 | 5 | 5 |
| Plastifiant (4) | 0 | 25 | 0 | 0 | 0 |
| Plastifiant (5) | 0 | 0 | 25 | 0 | 0 |
| Plastifiant (6) | 0 | 0 | 0 | 25 | 0 |
| Plastifiant (7) | 0 | 0 | 0 | 0 | 25 |
| ZnO | 2.5 | 2.5 | 2.5 | 2.5 | 2.5 |
| Acide stéarique | 2.0 | 2.0 | 2.0 | 2.0 | 2.0 |
| Antioxydant (8) | 1.9 | 1.9 | 1.9 | 1.9 | 1.9 |
| Cire ozone | 1.5 | 1.5 | 1.5 | 1.5 | 1.5 |
| DPG (9) | 1.5 | 1.5 | 1.5 | 1.5 | 1.5 |
| Sulfénamide | 1.8 | 1.8 | 1.8 | 1.8 | 1.8 |
| Soufre | 1.4 | 1.4 | 1.4 | 1.4 | 1.4 |

(suite)

| | C0 non conforme | C1 conforme | C2 conforme | C3 conforme | C4 non conforme |
|---|---|---|---|---|---|
| Fraction volumique charge | 25% | 25% | 25% | 25% | 25% |
| **Propriétés à cuit** | | | | | |
| tan$\delta$ max 23°C | 100 | 113 | 105 | 113 | 100 |
| tan$\delta$ max -20°C | 100 | 154 | 115 | 136 | 119 |

(1) Butyl bromé
(2) Silice « Zeosil 1165 MP » de la société Rhodia (type HDS)
(3) Aminopropyltriéthoxysilane
(4) Huile de tounesol à 85% en poids d'acide oléique « Lubrirod Tod 1880 » de la société Novance de Tg -90°C
(5) Mélange de 12.5 pce d'huile polybutène TPC 150 (Tg -103°C, Mn 560, Ip 2.08) et de 12.5 pce de Dynapac 190 (Tg -84°C, Mn 1190, Ip 1.62)
(6) Mélange de 12.5 pce de tris(2-éthylhexyl)phosphate et de 12.5 pce de Dynapac 190
(7) Huile TDAE VivaTec500 de Tg -44°C de la société Klaus Dahleke
(8) N-(1,3-diméthylbutyl)-N'-phényl-p-phénylènediamine, de la société Flexsys
(9) Diphénylguanidine (« Perkacit » DPG de la société Flexsys)

Les propriétés des compositions C0, C1, C2, C3 et C4 après cuisson figurent dans le tableau I.

On constate que les compositions C1, C2 et C3 sont à la fois beaucoup moins hystérétiques à 23°C et plus hystérétiques à -20°C que la composition témoin C0. Ces résultats traduisent que la combinaison spécifique selon l'invention permet un gain à la fois en résistance au roulement et un gain en adhérence sur sol mouillé d'un pneumatique comportant une bande de roulement à base de caoutchouc butyl conformément à l'invention.

Quant à la composition C4, l'augmentation du tandelta à -20°C ne s'accompagne pas d'une baisse du tandelta à 23°C. Ce résultat montre qu'il n'est pas possible d'obtenir à la fois un gain de la performance d'adhérence sur sol mouillé et un gain de la performance de basse résistance au roulement en utilisant un plastifiant qui n'est pas conforme à l'invention en raison de sa température de transition vitreuse qui est supérieure à -75°C.

## Revendications

1. Bande de roulement de pneumatique comportant une composition de caoutchouc à base :

   - d'au moins un caoutchouc butyl présent selon une teneur supérieure à 80 pce et inférieure ou égale à 100 pce,
   - d'une charge renforçante,
   - d'un système plastifiant qui comprend de 20 à 40 pce d'au moins un premier plastifiant compatible avec l'au moins un caoutchouc butyl et de température de transition vitreuse inférieure à -75°C, le taux massique du système plastifiant $P$ exprimé par rapport à la masse de l'au moins un caoutchouc butyl et la température de transition vitreuse $Tg_P$ du système plastifiant exprimée en degré Kelvin satisfaisant à la relation suivante :

$$P \times (208 - Tg_P) \div Tg_P \geq 0.015$$

2. Bande de roulement selon la revendication 1, dans laquelle l'au moins premier plastifiant présente une température de transition vitreuse inférieure à -85°C, préférentiellement inférieure à -95°C.

3. Bande de roulement selon l'une quelconque des revendications 1 à 2, dans laquelle le taux de l'au moins un caoutchouc butyl est supérieur à 85 pce, préférentiellement supérieur à 90 pce et inférieur ou égal à 100 pce.

4. Bande de roulement selon la revendication 3, dans laquelle le taux de l'au moins un caoutchouc butyl est égal à 100 pce.

5. Bande de roulement selon l'une quelconque des revendications 1 à 4, dans laquelle le taux massique du système plastifiant $P$ exprimé par rapport à la masse de l'au moins un caoutchouc butyl et la température de transition vitreuse

$Tg_P$ du système plastifiant exprimée en degré Kelvin satisfont à la relation suivante :

$$P \times (208 - Tg_P) \div Tg_P \geq 0.025$$

6.  Bande de roulement selon l'une quelconque des revendications 1 à 5, dans laquelle l'au moins un premier plastifiant est un ester d'acide carboxylique, préférentiellement un monoester ou un diester.

7.  Bande de roulement selon la revendication 6, dans laquelle l'au moins un premier plastifiant est un triester d'acide gras, préférentiellement le trioléate de glycérol.

8.  Bande de roulement selon l'une quelconque des revendications 1 à 5, dans laquelle l'au moins un premier plastifiant est une huile polydiène, préférentiellement de masse molaire moyenne en nombre inférieure à 8000 g/mol, plus préférentiellement inférieure à 5000 g/mol.

9.  Bande de roulement selon la revendication 8 dans laquelle l'au moins un premier plastifiant est un polybutadiène.

10.  Bande de roulement selon l'une quelconque des revendications 1 à 9 dans laquelle le système plastifiant comprend entre 0 et 30 pce d'un deuxième plastifiant.

11.  Bande de roulement selon l'une quelconque des revendications 1 à 9 dans laquelle le système plastifiant consiste en l'au moins un premier plastifiant.

12.  Bande de roulement selon l'une quelconque des revendications 1 à 11, dans laquelle la charge renforçante comprend une charge inorganique renforçante, préférentiellement une silice.

13.  Bande de roulement selon la revendication 12, dans laquelle la composition comprend en outre un agent de couplage.

14.  Bande de roulement selon la revendication 13, dans laquelle la matrice élastomère comprend un caoutchouc butyl halogéné et l'agent de couplage est un aminoalkylalkoxysilane ou un mélange d'aminoalkylalkoxysilane et d'alkylalkoxysilane polysulfuré.

15.  Bande de roulement selon l'une quelconque des revendications 13 à 14, dans laquelle la charge inorganique renforçante représente plus de 50% en poids de la charge renforçante.

16.  Pneumatique comportant une bande de roulement selon l'une quelconque des revendications 1 à 15.

17.  Composition de caoutchouc comme définie dans la revendication 15.

**Patentansprüche**

1.  Reifenlauffläche, enthaltend eine Kautschukzusammensetzung auf der Basis von:

    - mindestens einem Butylkautschuk, der in einem Gehalt von mehr als 80 phr und weniger als oder gleich 100 phr vorhanden ist,
    - einem verstärkenden Füllstoff,
    - einem Weichmachersystem, das 20 bis 40 phr mindestens eines ersten Weichmachers umfasst, der mit dem mindestens einen Butylkautschuk kompatibel ist und dessen Glasübergangstemperatur niedriger als -75°C ist, wobei der Massenanteil des Weichmachersystems P, ausgedrückt bezogen auf die Masse des mindestens einen Butylkautschuks, und die Glasübergangstemperatur $Tg_P$ des Weichmachersystems, ausgedrückt in Grad Kelvin, die folgende Gleichung erfüllen:

$$P \times (208 - Tg_P) \div Tg_P \geq 0{,}015$$

2.  Lauffläche nach Anspruch 1, wobei der mindestens erste Weichmacher eine Glasübergangstemperatur von unter -85°C, vorzugsweise unter -95°C aufweist.

3. Lauffläche nach einem der Ansprüche 1 bis 2, wobei der Anteil des mindestens einen Butylkautschuks größer als 85 phr, vorzugsweise größer als 90 phr und kleiner als oder gleich 100 phr ist.

4. Lauffläche nach Anspruch 3, wobei der Anteil des mindestens einen Butylkautschuks gleich 100 phr ist.

5. Lauffläche nach einem der Ansprüche 1 bis 4, wobei der Massenanteil des Weichmachersystems *P*, ausgedrückt bezogen auf die Masse des mindestens einen Butylkautschuks, und die Glasübergangstemperatur Tg$_P$ des Weichmachersystems, ausgedrückt in Grad Kelvin, die folgende Gleichung erfüllen:

$$P \times \left(208 - Tg_P\right) \div Tg_P \geq 0{,}025$$

6. Lauffläche nach einem der Ansprüche 1 bis 5, wobei der mindestens eine erste Weichmacher ein Carbonsäureester, vorzugsweise ein Monoester oder ein Diester ist.

7. Lauffläche nach Anspruch 6, wobei der mindestens eine erste Weichmacher ein Fettsäuretriester, vorzugsweise Glycerintrioleat ist.

8. Lauffläche nach einem der Ansprüche 1 bis 5, wobei der mindestens eine erste Weichmacher ein Polydien-Öl, vorzugsweise mit einem Zahlenmittel der Molmasse von weniger als 8000 g/mol, stärker bevorzugt weniger als 5000 g/mol ist.

9. Lauffläche nach Anspruch 8, wobei der mindestens eine erste Weichmacher ein Polybutadien ist.

10. Lauffläche nach einem der Ansprüche 1 bis 9, wobei das Weichmachersystem zwischen 0 und 30 phr eines zweiten Weichmachers umfasst.

11. Lauffläche nach einem der Ansprüche 1 bis 9, wobei das Weichmachersystem aus mindestens einem ersten Weichmacher besteht.

12. Lauffläche nach einem der Ansprüche 1 bis 11, wobei der verstärkende Füllstoff einen verstärkenden anorganischen Füllstoff, vorzugsweise ein Siliziumdioxid, umfasst.

13. Lauffläche nach Anspruch 12, wobei die Zusammensetzung außerdem ein Kupplungsmittel umfasst.

14. Lauffläche nach Anspruch 13, wobei die Elastomer-Matrix einen halogenierten Butylkautschuk umfasst und das Kupplungsmittel ein Aminoalkylalkoxysilan oder ein Gemisch aus Aminoalkylalkoxysilan und polysulfidiertem Alkylalkoxysilan ist.

15. Lauffläche nach einem der Ansprüche 13 bis 14, wobei der verstärkende anorganische Füllstoff mehr als 50 Gew.-% des verstärkenden Füllstoffs ausmacht.

16. Reifen mit einer Lauffläche nach einem der Ansprüche 1 bis 15.

17. Kautschukzusammensetzung nach Anspruch 15.

## Claims

1. Tyre tread comprising a rubber composition based:

   - on at least one butyl rubber present in a content of greater than 80 phr and less than or equal to 100 phr,
   - on a reinforcing filler,
   - on a plasticizing system that comprises from 20 to 40 phr of at least one first plasticizer compatible with the at least one butyl rubber and having a glass transition temperature below -75°C, the mass content of the plasticizing system *P* expressed relative to the mass of the at least one butyl rubber and the glass transition temperature *Tg$_P$* of the plasticizing system expressed in kelvin satisfying the following equation:

$$P \times (208 - Tg_P) \div Tg_P \geq 0.015$$

2. Tread according to Claim 1, in which the at least one first plasticizer has a glass transition temperature below -85°C, preferably below -95°C.

3. Tread according to either one of Claims 1 and 2, in which the content of the at least one butyl rubber is greater than 85 phr, preferably greater than 90 phr and less than or equal to 100 phr.

4. Tread according to Claim 3, in which the content of the at least one butyl rubber is equal to 100 phr.

5. Tread according to any one of Claims 1 to 4, in which the mass content of the plasticizing system $P$ expressed relative to the mass of the at least one butyl rubber and the glass transition temperature $Tg_P$ of the plasticizing system expressed in kelvin satisfy the following equation:

$$P \times (208 - Tg_P) \div Tg_P \geq 0.025$$

6. Tread according to any one of Claims 1 to 5, in which the at least one first plasticizer is a carboxylic acid ester, preferably a monoester or a diester.

7. Tread according to Claim 6, in which the at least one first plasticizer is a fatty acid triester, preferably glycerol trioleate.

8. Tread according to any one of Claims 1 to 5, in which the at least one first plasticizer is a polydiene oil, preferably having a number-average molar mass of less than 8000 g/mol, more preferably of less than 5000 g/mol.

9. Tread according to Claim 8, in which the at least one first plasticizer is a polybutadiene.

10. Tread according to any one of Claims 1 to 9, in which the plasticizing system comprises between 0 and 30 phr of a second plasticizer.

11. Tread according to any one of Claims 1 to 9, in which the plasticizing system consists of the at least one first plasticizer.

12. Tread according to any one of Claims 1 to 11, in which the reinforcing filler comprises a reinforcing inorganic filler, preferably a silica.

13. Tread according to Claim 12, in which the composition additionally comprises a coupling agent.

14. Tread according to Claim 13, in which the elastomer matrix comprises a halogenated butyl rubber and the coupling agent is an aminoalkylalkoxysilane or a mixture of aminoalkylalkoxysilane and alkylalkoxysilane polysulphide.

15. Tread according to either one of Claims 13 and 14, in which the reinforcing inorganic filler represents more than 50% by weight of the reinforcing filler.

16. Tyre comprising a tread according to any one of Claims 1 to 15.

17. Rubber composition as defined in Claim 15.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6060552 A
- EP 1687370 B1
- WO 20050445931 A1
- FR 2861736 A1
- US 6610261 B
- US 6747087 B
- WO 9637547 A
- WO 9928380 A
- WO 03002648 A
- US 2005016651 A
- WO 03002649 A
- US 2005016650 A
- WO 0230939 A
- US 6774255 B
- WO 0231041 A
- US 2004051210 A
- WO 2006125532 A
- WO 2006125533 A
- WO 2006125534 A
- US 6849754 B
- WO 9909036 A
- WO 2006023815 A
- WO 2007098080 A
- WO 2010072685 A
- WO 2008055986 A